Europäisches Patentamt

European Patent Office

Office européen des brevets

(11) Numéro de publication: **0 341 769 B1**

(12) **FASCICULE DE BREVET EUROPEEN**

(45) Date de publication de fascicule du brevet: **13.07.94** (51) Int. Cl.5: **G06F 15/70, H04N 7/01**

(21) Numéro de dépôt: **89201050.5**

(22) Date de dépôt: **24.04.89**

(54) **Dispositif pour interpoler des images par estimation et compensation de mouvement et système convertisseur de standards de télévision constitué à partir d'un tel dispositif.**

(30) Priorité: **29.04.88 FR 8805775**

(43) Date de publication de la demande:
**15.11.89 Bulletin 89/46**

(45) Mention de la délivrance du brevet:
**13.07.94 Bulletin 94/28**

(84) Etats contractants désignés:
**DE FR GB**

(56) Documents cités:
**GB-A- 2 153 625**
**GB-A- 2 172 171**

**COMPUTER VISION, GRAPHICS, AND IMAGE PROCESSING, vol. 21, no. 2, février 1983, pages 262-279, Academic Press, Inc.; M. YA-CHIDA: "Determining velocity maps byspa-tio-temporal neighborhoods from image se-quences"**

(73) Titulaire: **LABORATOIRES D'ELECTRONIQUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB**

(72) Inventeur: **Lamnabhi, Moustanir**
**Societe CIVILE S.P.I.D.**
**209 rue de l'Université**
**F-75007 Paris(FR)**
Inventeur: **Lhuillier, Jean-Jacques**
**Societe CIVILE S.P.I.D.**
**209 rue de l'Université**
**F-75007 Paris(FR)**

(74) Mandataire: **Chaffraix, Jean et al**
**Société Civile S.P.I.D.**
**156, Boulevard Haussmann**
**F-75008 Paris (FR)**

## Description

La présente invention concerne un dispositif pour interpoler par estimation et compensation de mouvement des images découpées en blocs de p points d'images, dispositif comportant :

- un organe de calculs d'interpolation pour former une image M en fonction de vecteurs de mouvement $\vec{D}$ en effectuant une opération du genre :

$$I(\vec{z},M)=(1-\alpha) \cdot I(\vec{z}-\alpha\vec{D},E1)+\alpha I[\vec{z}+(1-\alpha)\vec{D},E2]$$

le vecteur mouvement $\vec{D}$ représentant le déplacement du point de l'image M défini par $\vec{z}$ entre les images E1 et E2,
- un organe d'estimation de mouvement par blocs pour former des vecteurs de mouvement $\vec{D}_{m,n}$ définis pour des blocs de points d'images identifiés par m, n,
- un organe de test de cohérence pour fournir audit organe de calculs d'interpolations, un vecteur final de mouvement DP pour chaque point de l'image à interpoler, en considérant les vecteurs de mouvement des points voisins.

De tels dispositifs trouvent des applications importantes notamment dans le domaine de la télévision. Ainsi par la connaissance des vecteurs de mouvement qui définissent le déplacement de différents points d'images successives, il est possible de former par interpolation une image de bonne qualité en un instant choisi entre deux images successives.

Ce genre de dispositif pour lequel on utilise une estimation de mouvement pour tout un bloc de points d'images est bien connu. On pourra consulter à ce sujet l'article de C. CAFFORIO et ROCCA intitulé : "The differential method for image motion estimation" paru dans Image sequence processing and dynamic scene analysis, T.S. Huang Ed., Berlin, Germany, Springer-Verlag, 1983, pp.76-103.

Si les blocs comportent beaucoup de points, on se heurte à un premier inconvénient. Cet inconvénient est dû au fait qu'il peut arriver que les points d'images d'un même bloc se déplacent d'une image à l'autre d'une quantité bien différente, il en résulte donc des images interpolées de mauvaise qualité.

Si les blocs comportent peu de points, on se heurte à un deuxième inconvénient car l'estimation de mouvement peut être faussée par le bruit et là encore on obtient une image de mauvaise qualité.

La présente invention propose donc un dispositif du genre mentionné ci-dessus qui donne un vecteur mouvement pour tout point ou quelques points tout en restant insensible au bruit.

Pour cela un tel dispositif est remarquable en ce qu'il comporte, en outre :

- un organe d'affectation pour déterminer un vecteur mouvement pour chaque point d'image $\vec{z}$ parmi des vecteurs de mouvement candidats $\vec{D}_c$ qui sont associés à un ensemble prédéterminé de blocs et auxquels est rattachée une fonction CT($\vec{z},\vec{D}_c$).

Il est à noter que les documents ci-dessous illustrent d'autres démarches pour obtenir la détermination du vecteur mouvement.

La demande de brevet GB-A 2 153 625 décrit un système de détermination de mouvement utilisant une méthode de gradient et non une méthode par blocs telle que proposée par l'invention.

La demande de brevet GB-A 2 172 171 décrit un système de détermination de mouvement utilisant une méthode de blocs. Cependant, on ne décrit pas ici les moyens qui affectent à chaque point d'image un vecteur mouvement. Il est à bien remarquer que la présente invention permet que les points d'un même bloc peuvent être affectés d'un vecteur mouvement différent.

Dans l'article de COMPUTER VISION, GRAPHICS AND IMAGE PROCESSING, n°21 (1983) on attribue en utilisant un processus itératif un vecteur mouvement à chaque point en se basant sur les vecteurs mouvement des points voisins. Cependant on n'utilise pas au préalable une détermination de mouvement par blocs, telle qu'indiquée dans notre revendication 1.

La présente invention concerne aussi un système convertisseur de standards constitué à partir d'un tel dispositif. Un exemple de conversion est celui qui consiste à transformer des images apparaissant à la cadence de 50 Hz en images de cadence 60 Hz (ou plus exactement 59,94 Hz). De ce fait, il est impossible de faire coïncider les images ; les images à former à la cadence de 59,94 Hz sont obtenues par interpolation à partir des images à 50 Hz. Les articles suivants décrivent des systèmes de cette sorte :

"Movement-Compensated Frame-Frequency Conversion of Television Signal" HIROHISA YAMAGUCHI et al. IEEE Transactions on Communications, vol.COM-35, N°10, oct. 1987.

"HDTV-PAL Standards Converter" YUTALEA TANAKA et al. NHK Laboratories Note, jan. 1986, N° serie 326.

La qualité des images fournies par ces systèmes repose en grande partie sur une bonne appréciation du vecteur mouvement.

Pour interpoler des successions d'images, une caractéristique importante de l'invention selon laquelle un dispositif du genre ci-dessus comporte un organe de test de cohérence de vecteur mouvement pour fournir un signal de validation pour chaque vecteur mouvement affecté à un point, par comparaison avec des points correspondants situés dans des images de ladite succession, amène l'avantage d'éviter certaines ambiguïtés sur la détermination du vecteur mouvement. Ces ambiguïtés surviennent notamment pour des objets de taille réduite se déplaçant dans un fond continu. Certaines portions de l'objet seront affectées d'un bon vecteur mouvement mais d'autres pourront être affectées du vecteur mouvement correspondant au fond. L'image interpolée montrera des discontinuités dans la reproduction de cet objet et ces discontinuités apparaîtront en des endroits différents de l'image lors d'une succession de celles-ci. L'objet apparaîtra finalement d'une manière dégradée. Grâce à cette caractéristique de l'invention, on évite dans une large mesure cette dégradation et ces discontinuités en comparant les vecteurs mouvements tant dans un domaine spatial entourant le point de l'image que dans des domaines entourant les points correspondants dans des images différentes.

La description suivante accompagnée des dessins ci-annexés, le tout donné à titre d'exemple non limitatif fera bien comprendre comment l'invention peut être réalisée.

La figure 1 montre un schéma pour interpoler des images selon l'invention.

La figure 2 montre la construction de l'image à interpoler à partir de deux images existantes.

La figure 3 montre la décomposition des images en points d'images (pixels) et en blocs de points.

La figure 4 montre comment sont choisis les vecteurs initiaux relatifs à des blocs déjà traités.

La figure 5 montre l'intérêt de l'organe de cohérence.

La figure 6 explicite les domaines pour lesquels cette cohérence est effectuée.

La figure 7 explicite le domaine pour lequel on détermine une majorité.

La figure 8 montre la construction des images pour effectuer une conversion de standards.

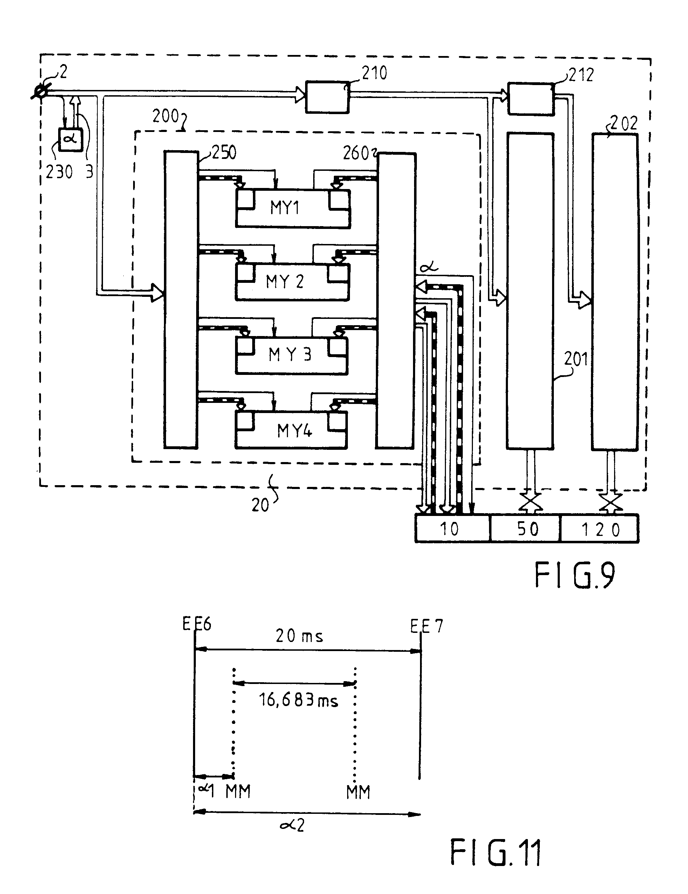

La figure 9 montre le détail du circuit de mémoire utilisé par l'invention.

La figure 10 est un diagramme temps montrant le fonctionnement du circuit de la figure 9.

La figure 11 explicite un détail de fonctionnement où l'on convertit dans un standard à 59,94 Hz.

La figure 12 montre le détail d'un organe d'estimation par bloc utilisé par l'invention.

La figure 13 montre comment est effectué une interpolation linéaire de point.

La figure 14 montre le détail de l'organe d'affection utilisé par l'invention.

La figure 15 montre le détail d'un circuit de traitement utilisé par l'invention.

La figure 16 montre le détail d'un circuit de répartition utilisé par l'invention.

La figure 17 montre le détail d'un circuit de majorité utilisé par l'invention.

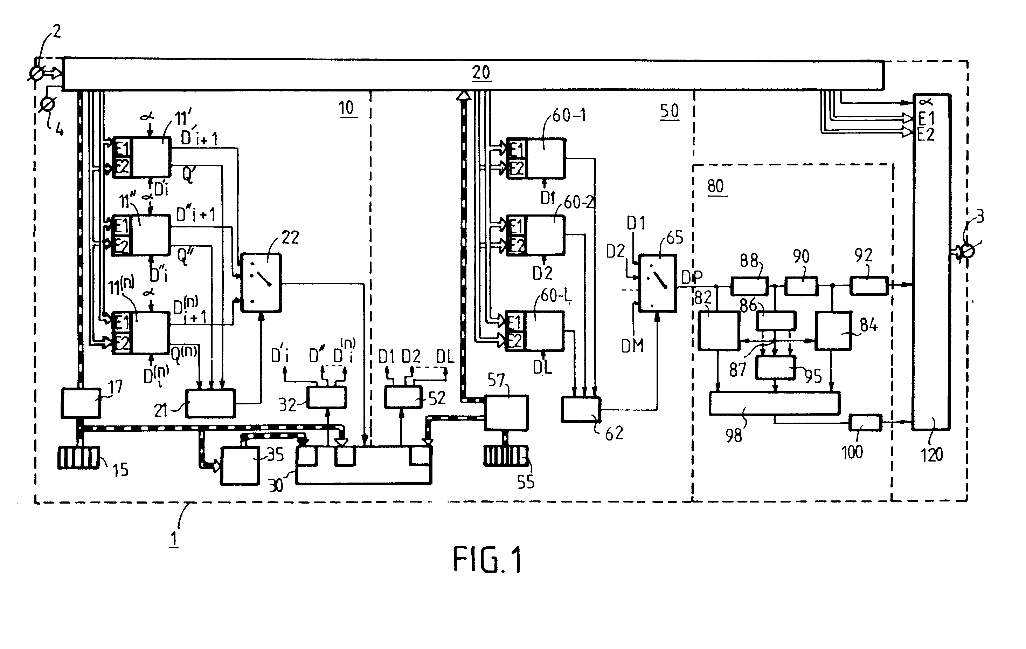

A la figure 1, on a représenté avec la référence 1 le dispositif de l'invention.

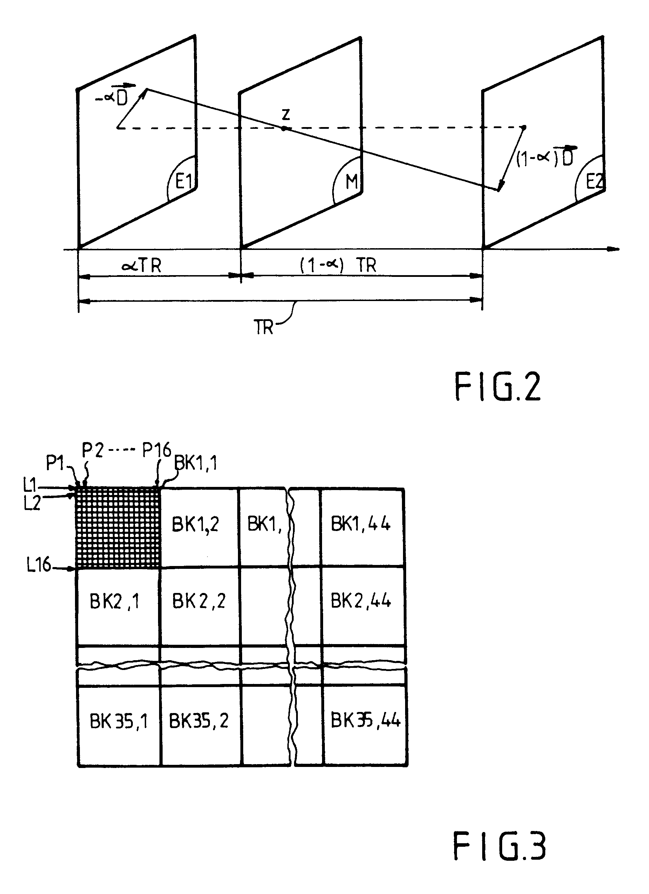

A la figure 1, on a représenté avec la référence 1 le dispositif de l'invention. Ce dispositif comporte, tout d'abord, un premier accès 2 pour recevoir des informations d'image et un deuxième accès 3 pour fournir l'image interpolée. Cette image interpolée dépend d'un paramètre $\alpha$ appliqué à un quatrième accès 4. Ce paramètre $\alpha$ est défini de la manière suivante. Pour cela, on se reporte à la figure 2. Soient E1 et E2 deux images successives apparaissant en des temps distants d'une durée TR. Le dispositif de l'invention se propose de fournir, par interpolation, une image manquante M située dans le temps à $\alpha$.TR de E1 et à $(1-\alpha)$.TR de E2 avec $\alpha$ compris entre 0 et 1.

Si on appelle $\vec{z}$ le vecteur représentant les coordonnées d'un point des images et $I(\vec{z},M)$ la luminance d'un point de coordonnée $\vec{z}$ de l'image M cette luminance se déduit par interpolation selon la formule :

$$I(\vec{z},M) = (1-\alpha).I(\vec{z}-\alpha\vec{D},E1) + \alpha I[\vec{z}+(1-\alpha)\vec{D},E2] \qquad (1)$$

où $\vec{D}$ est le vecteur mouvement, $\vec{D}$ représente le déplacement du point défini par $\vec{z}$, entre les images E1 et E2.

Pour établir l'image manquante on applique la formule (1) pour tout point $\vec{z}$ de cette image manquante.

A cet effet, le dispositif de l'invention comporte, tout d'abord un organe d'estimation de mouvement par blocs 10. Cet organe va fournir pour un bloc de, par exemple 16 x 16 points d'image, un vecteur $\vec{D}$. A la figure 3 on a montré la décomposition d'une image en blocs. Chaque image est composée de 1540 blocs. Ces blocs sont organisés en 35 lignes de 44 blocs. Ainsi les blocs BK1,1 ; BK1,2 ;... BK1,44 appartiennent à la première ligne, les blocs BK2,1 ; BK2,2 ;... BK2,44 à la deuxième ligne, et ainsi de suite jusqu'aux blocs BK35,1 ; BK35,2 ;... BK35,44 qui appartiennent à la trente cinquième ligne. Chaque bloc est formé de 16 lignes L1, L2, L3,... L16 dont chacune contient 16 points P1, P2, ... P16 : ceci est seulement détaillé pour le bloc BK1,1. Ainsi l'organe 10 va fournir pour chaque bloc BKm,n de l'image M, un vecteur mouvement $\vec{D}$ m,n.

Pour établir ce vecteur $\vec{D}$ m,n l'organe 10 est muni d'une pluralité d'organes élémentaires 11', 11",... 11$^{(n)}$. Ces organes fournissent un vecteur mouvement D'$_{i+1}$,

$$D\text{"}_{i+1}, \ldots D_{i+1}^{(n)}$$

pour un bloc donné, défini par le contenu d'un compteur de bloc 15. Ce compteur 15 associé à un circuit de décodage 17 va adresser un circuit de mémoire 20 contenant toutes les informations de luminance des images E1 et E2 à partir desquelles on va élaborer l'image M. Ce circuit 17 ne va fournir en direction des organes élémentaires 11', 11",... 11$^{(n)}$ que les informations nécessaires pour établir les valeurs du vecteur mouvement D'$_{i+1}$,

$$D\text{"}_{i+1}, \ldots D_{i+1}^{(n)}.$$

Parmi tous les vecteurs D'$_{i+1}$,

$$D\text{"}_{i+1}, \ldots D_{i+1}^{(n)}$$

un seul sera retenu. Un circuit 21 détermine le meilleur selon un certain critère défini par une information de qualité Q', Q",... Q$^{(n)}$ élaborée par chaque organe élémentaire 11', 11",... 11$^{(n)}$. Ce circuit 21 commande, en fonction de cela, la position d'un multiplexeur 22 pour que le vecteur retenu Dm,n soit enregistré dans un deuxième circuit mémoire 30 en une place affectée au bloc BKm,n. Selon le mode préféré de l'invention les organes élémentaires opèrent selon l'algorithme C.CAFFORIO et ROCCA décrit dans l'article précité. Tout autre algorithme fournissant des vecteurs mouvement convient aussi et rentre naturellement dans le cadre de l'invention.

Selon l'algorithme préféré de l'invention on ajoute une valeur $\delta$ de correction à une valeur antérieure selon un processus itératif de sorte que l'on peut écrire :

$$D_{i+1} = D_i + \delta \qquad (2)$$

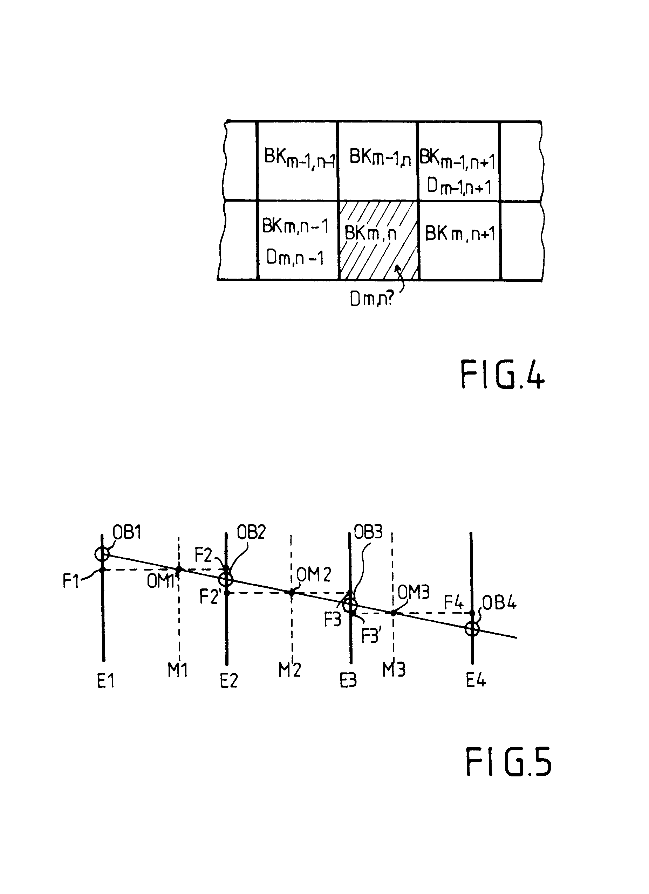

Cette opération peut être effectuée plusieurs fois. Mais la demanderesse s'est aperçue qu'une seule itération suffisait pour obtenir de bonnes performances du dispositif de l'invention. Les valeurs initiales peuvent être prises en considérant le vecteur mouvement de blocs voisins déjà calculés. Selon une caractéristique de l'invention pour déterminer le vecteur Dm,n on prendra comme valeurs initiales $D_{m-1,n+1}$ et $D_{m,n-1}$ (voir figure 4) qui sont les vecteurs mouvement affectés aux blocs BKm-1,n + 1 et BKm,n-1 traités antérieurement donc et les vecteurs ont déjà été calculés. Le vecteur de mouvement nul peut être aussi considéré. Ces vecteurs sont rendus disponibles aux sorties d'un registre 32 relié avec le circuit mémoire 30.

Pour déterminer $D_{i+1}$ les organes élémentaires 11 effectuent l'opération indiquée par l'équation (2) avec :

$$\delta = \begin{vmatrix} \delta_H \\ \delta_V \end{vmatrix}$$

$$\delta_H = \frac{[\sum_A (\nabla_V I)^2][\sum_A (DFD.\nabla_H I)] - [\sum_A (\nabla_H I.\nabla_V I)][\sum_A (DFD.\nabla_V I)]}{[\sum_A (\nabla_H I)^2][\sum_A (\nabla_V I)^2] - [\sum_A (\nabla_H I.\nabla_V I)]^2} \qquad (3)$$

$$\delta_V = \frac{[\sum_A (\nabla_V I)^2][\sum_A (DFD.\nabla_H I)] - [\sum_A (\nabla_H I.\nabla_V I)][\sum_A (DFD.\nabla_V I)]}{[\sum_A (\nabla_H I)^2][\sum_A (\nabla_V I)^2] - [\sum_A (\nabla_H I.\nabla_V I)]^2} \qquad (4)$$

où A représente les 16 x 16 points d'image du bloc pour lesquels les calculs sont faits où :

$$\mathrm{DFD} = \mathrm{DFD}(\vec{z},\vec{D}) = I[\vec{z}+(1-\alpha)\vec{D},E2] - I(\vec{z}-\alpha\vec{D},E1) \tag{5}$$

$$\nabla_H I = \nabla_H I(z,M) = (1-\alpha)\nabla_H I(\vec{z}-\alpha\vec{D},E1) + \alpha\nabla_H I[\vec{z}+(1-\alpha)\vec{D},E2] \tag{6}$$

$$\nabla_V I = \nabla_V I(z,M) = (1-\alpha)\nabla_V I(\vec{z}-\alpha\vec{D},E1) + \alpha\nabla_V I[\vec{z}+(1-\alpha)\vec{D},E2] \tag{7}$$

$$\mathrm{Si} \ \vec{z} = \begin{vmatrix} x \\ y \end{vmatrix} \qquad \mathrm{et} \ E = E1 \ \mathrm{ou} \ E2,$$

$$\nabla_H I(Z,E) = \tfrac{1}{2}[I(X+\Delta X,E) - I(X-\Delta X,E)] \tag{8}$$

$$\triangle_V I(Z,E) = \tfrac{1}{2}[I(Y+\Delta Y,E) - I(Y-\Delta Y,E)] \tag{9}$$

$\Delta X$, $\Delta Y$ représentent les distances horizontale et verticale entre deux points d'image.

La quantité $Q^{(j)}$ analysée par le circuit 21 relativement à un vecteur

$$D_{i+1}^{(j)}$$

est donnée par :

$$Q^{(j)} = \sum_A [\mathrm{DFD}]^2 - [\delta_H \sum_A \mathrm{DFD}.\nabla_H I + \delta_V \sum_A \mathrm{DFD}.\nabla_V I] \tag{10}$$

Le vecteur

$$D_{i+1}^{(j)}$$

retenu sera celui pour lequel la quantité $Q^{(j)}$ sera minimale.

Le dispositif de l'invention comporte aussi un organe d'affectation 50 qui va affecter à chaque point de l'image M un vecteur mouvement DP. A chaque point, on associe L vecteurs candidats D1, D2,... DL qui sont des vecteurs mouvements associés à des blocs voisins de celui contenant le point. Dans l'exemple de réalisation préféré neuf vecteurs candidats ont été sélectionnés pour un point appartenant à un bloc BKm,n : ce sont :

$D_{m-1,n-1}$
$D_{m-1,n}$
$D_{m-1,n+1}$
$D_{m,n-1}$
$D_{m,n}$
$D_{m,n+1}$
$D_{m+1,n-1}$
$D_{m+1,n}$
$D_{m+1,n+1}$

Ces vecteurs sont prélevés dans le circuit mémoire 30 et emmagasinés pour le calcul dans un registre 52. Pour cela le circuit mémoire 30 est adressé par un circuit de transcodage 57 piloté par un compteur de points d'image 55, ce circuit 57 déterminant notamment pour le point courant les vecteurs mouvements candidats à traiter par l'organe d'affectation 50. Différents organes élémentaires d'affectation 60-1, 60-2,... 60-L effectuent chacun un traitement sur chacun des L vecteurs candidats Dc (c = 1,..., L). Un circuit de décision 62 recevant les résultats des différents organes élémentaires d'affectation détermine le vecteur DP pris parmi ces candidats. Ce vecteur est sélectionné au moyen d'un commutateur 65 commandé par le circuit 62. Pour faire cette sélection, on examine au niveau du circuit 62 la fonction CT(z,Dc) associée au point courant et à chaque vecteur mouvement candidat. Cette fonction CT(z,Dc) est telle que :

$$CT(z,Dc) = \sum_{B} |DFD(z,Dc)| \qquad\qquad (11)$$

B est un domaine de taille réduite par rapport à A. Par exemple, B est constitué par 8 points entourant le point courant.

C'est le vecteur Dc pour lequel la valeur CT(z,Dc) est minimale qui est retenu.

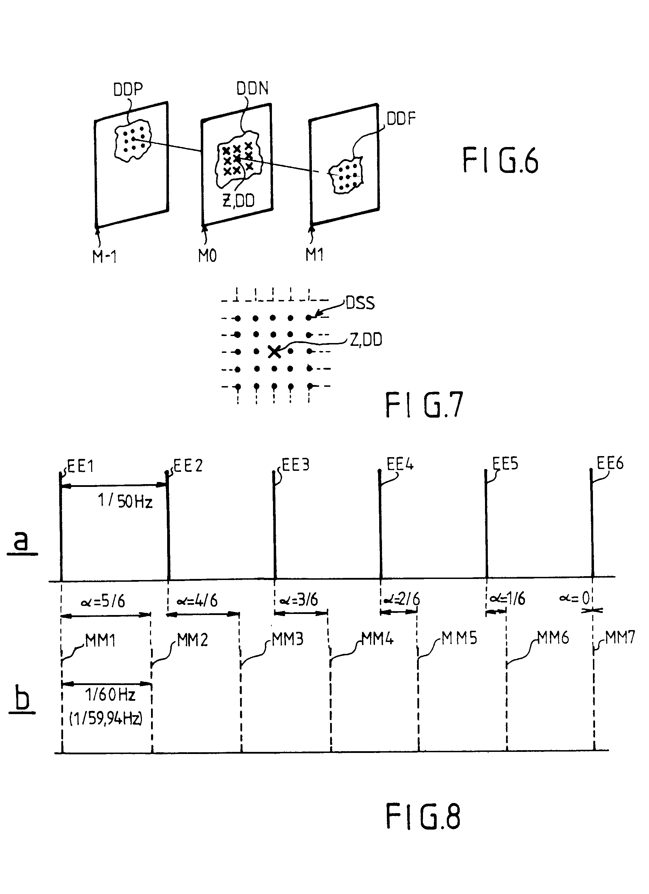

Le dispositif de l'invention comporte, en outre, un organe de test de cohérence de vecteur mouvement 80. Pour bien comprendre l'intérêt d'un tel organe on se reporte à la figure 5. Sur cette figure 5 on a représenté en E1, E2, E3, E4 une section horizontale d'une suite d'images. OB représente un objet qui se déplace selon cette section. Dans l'image E1 l'objet occupe la place OB1, dans l'image E2 l'objet occupe la place OB2, dans l'image E3 l'objet occupe la place OB3, dans l'image E4 l'objet occupe la place OB4.

On suppose, d'une part que cet objet OB se déplace dans un fond uniforme et d'autre part que les valeurs des déplacements de l'objet et du fond sont connues. On s'intéresse maintenant à l'interpolation de cet objet OB pour l'image manquante M1 et donc à l'emplacement OM1. Les emplacements OB1 et OB2 donnent une bonne corrélation mais F1 et F2, qui correspondent au fond, donnent aussi une bonne corrélation de sorte qu'en OM1 on aura d'une manière aléatoire soit une interpolation entre OB1 et OB2, soit une interpolation entre F1 et F2. Cette indétermination va se produire pour OM2, pour OM3 de sorte que l'objet ou des parties de lui-même apparaissent pour certaines images manquantes et n'apparaissent pas pour d'autres.

Le but de cet organe de test de cohérence de vecteurs mouvement 80 est d'éviter l'aléa des décisions des vecteurs mouvements effectués par l'organe d'affectation 50. Cet organe comporte un premier circuit de traitement 82 comportant des moyens pour contenir tous les vecteurs mouvements de l'image future (ou image postérieure) à interpoler et un deuxième circuit de traitement 84 comportant des moyens pour contenir tous les vecteurs mouvements de l'image passée (ou antérieure). Un circuit de répartition 86 est relatif à l'image présente. Différents circuits de retard 88, 90 et 92 amènent les retards convenables pour que les différents traitements puissent s'effectuer de manière cohérente. Le circuit de répartition 86 fournit sur une de ses sorties 87 la valeur du vecteur mouvement relatif au point courant ainsi qu'un certain nombre de vecteurs mouvements relatifs à différents points faisant partie d'un domaine spatial DDN du point courant de l'image. Ceci est représenté à la figure 6 où l'image courante à interpoler porte la référence MO. Le domaine DDN entoure le point courant Z auquel est affecté le vecteur mouvement $\vec{D}$D. Le vecteur $\vec{D}$D et le point défini par $\vec{Z}$ définissent différents domaines :

- Le domaine DDP dans l'image interpolée antérieure M-1. Ce domaine est centré autour du point $\vec{Z}$-$\beta.\vec{D}$D où $\beta$ est un coefficient dépendant de la fréquence d'entrée des images et de la fréquence de sortie des images interpolées.
- Le domaine DDF dans l'image interpolée postérieure M+1 centré autour du point $\vec{Z} + \beta.\vec{D}$D.

Dans cet exemple décrit les domaines DDF, DDN et DDP sont égaux entre eux et égaux à $3.\Delta X$ par $3.\Delta Y$.

Le circuit de similitude 95 coopérant avec le circuit 86 détermine, dans une première étape, si le vecteur $\vec{D}$D est semblable aux autres vecteurs fournis par le circuit 86.

On dit qu'un vecteur $\vec{D}$D tel que :

$$\vec{\hat{DD}} = \begin{vmatrix} \hat{DD}_H \\ \hat{DD}_V \end{vmatrix}$$

est semblable au vecteur $\vec{D}$D tel que :

$$\vec{DD} = \begin{vmatrix} DD_H \\ DD_V \end{vmatrix}$$

6

Si :

$$|DD_H - \hat{D}D_H| \leqq k.\Delta X$$

et

$$|DD_V - \hat{D}D_V| \leqq k'.\Delta Y$$

où k et k' sont des entiers tels que k≈k'≈2.

Le circuit fournit, dans une deuxième étape, le signal de similitude si un certain nombre de vecteurs du domaine DDN sont semblables.

De même les circuits 82 et 84 fournissent aussi des signaux de similitude relatifs aux domaines DDF et DDP et par rapport à ce même vecteur $\vec{D}D$.

Un organe de cohérence finale 98 fournit à sa sortie, pour chaque point courant un signal de cohérence donnant le résultat de la cohérence considérée tant sur l'image présente que sur les images antérieures et postérieures. On dit qu'il y a cohérence si, au moins un signal de similitude est fourni par l'un des circuits 82, 84 et 95. Bien qu'on ait décrit un traitement impliquant une image antérieure ou une image postérieure, il est bien évident qu'on peut aussi, sans sortir du cadre de l'invention, utiliser une pluralité d'images postérieures et/ou une pluralité d'images antérieures.

Un organe de filtrage de décision 100 analyse dans un domaine DSS entourant le point z (cf. figure 7) les décisions de cohérence élaborées par l'organe de cohérence final 98 pour fournir un signal de validité indiquant que le vecteur $\vec{D}D$ affecté au point Z est valide compte tenu de la cohérence des vecteurs affectés aux points de ce domaine DSS. Ce domaine DSS est par exemple étendu sur 17.$\Delta X$ par 17.$\Delta Y$. Ce filtrage peut correspondre dans le cas le plus simple à une décision majoritaire de cohérence dans le domaine DSS, donc supérieur à 144.

Ainsi un organe de calculs d'interpolation 120 effectue pour tout point Z des images à interpoler, le calcul indiqué par la formule (1) ci-dessus si le signal de validité est positif ou le calcul donné par la formule suivante relative à un vecteur mouvement nul si le signal de validité est négatif :

$$I(Z,M) = \alpha I(Z,E1) + (1-\alpha)I(Z,E2) \qquad (12)$$

On va décrire maintenant plus en détail l'invention en se référant plus particulièrement à un système convertisseur de standards qui fournit des images à la cadence de 60 Hz (ou plus exactement 59,94 Hz) à partir d'images à 50 Hz.

A la figure 8 en $\underline{a}$, on a représenté en traits continus les instants d'apparition d'images EE1, EE2, EE3,... EE6 fournies à la cadence de 50 Hz. En $\underline{b}$, on a représenté en trait pointillé les instants où les images MM1, MM2,... MM7 doivent être interpolées. Ces images doivent être fournies à la cadence 60 Hz. Les images interpolées sont construites à partir des images EEj en fonction du paramètre $\alpha$ selon la manière suivante :
- pour l'image MM2, on utilise les images EE1 et EE2 ($\alpha = 5/6$)
- pour l'image MM3, on utilise les images EE2 et EE3 ($\alpha = 4/6$)
- pour l'image MM4, on utilise les images EE3 et EE4 ($\alpha = 3/6$)
- pour l'image MM5, on utilise les images EE4 et EE5 ($\alpha = 2/6$)
- pour l'image MM6, on utilise les images EE5 et EE6 ($\alpha = 1/6$)
- pour l'image MM7 (et MM1), on utilise EE6 (et EE1) ($\alpha = 0$).

En fonction de ces considérations on décrit le circuit de mémoire 20.

Il se compose de trois agencements de mémoires 200, 201, 202 affectés respectivement à l'organe d'estimation 10, à l'organe d'affectation 50 et à l'organe de calculs d'interpolation 120. Ces agencements sont séparés par des éléments de retard 210 et 212 pour retarder les informations d'images à l'accès 2 d'un temps suffisant pour permettre les traitements effectués par les différents organes. Un circuit 230, en comptant les différentes images fournit une marque d'interpolation à partir de laquelle peut être déterminée $\alpha$. Cette valeur $\alpha$ est utilisée dans les différents traitements. La marque d'interpolation est affectée à chaque image entrante.

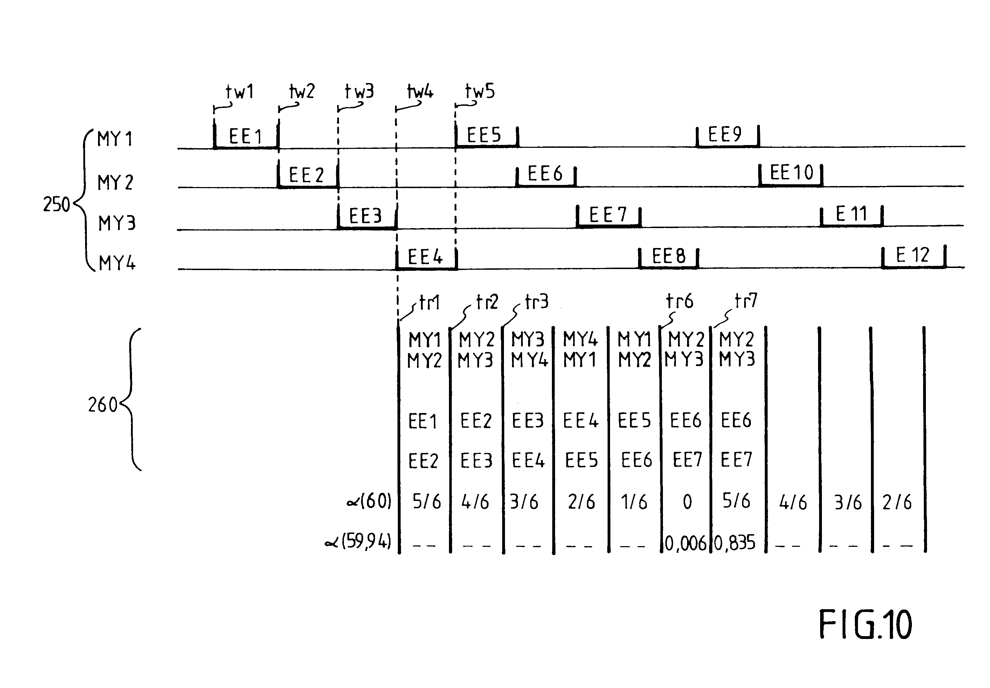

L'agencement 200 est formé de quatre mémoires MY1, MY2, MY3 et MY4 dont la capacité est suffisante pour enregistrer toute une image de points. A ces quatre mémoires est affecté un circuit d'écriture 250 et un circuit de lecture 260. La figure 10 montre comment cet agencement fonctionne. Chaque image entrante est inscrite tour à tour dans l'une des mémoires MY1 à MY4. Ainsi à l'instant tw1 l'image EE1 est emmagasinée dans la mémoire MY1, à l'instant tw2 l'image EE2 est emmagasinée dans la mémoire MY2 et ainsi de suite pour les instants tw3 et tw4 où les images EE3 et EE4 sont emmagasinées dans les mémoires MY3 et MY4. A l'instant tw5 un nouveau cycle commence pour les images EE5, EE6, EE7, EE8 qui sont enregistrées dans les mémoires MY1 à MY4. Les différents instants tw1, tw2,... tw5 sont séparés d'une durée égale à 1/50 Hz.

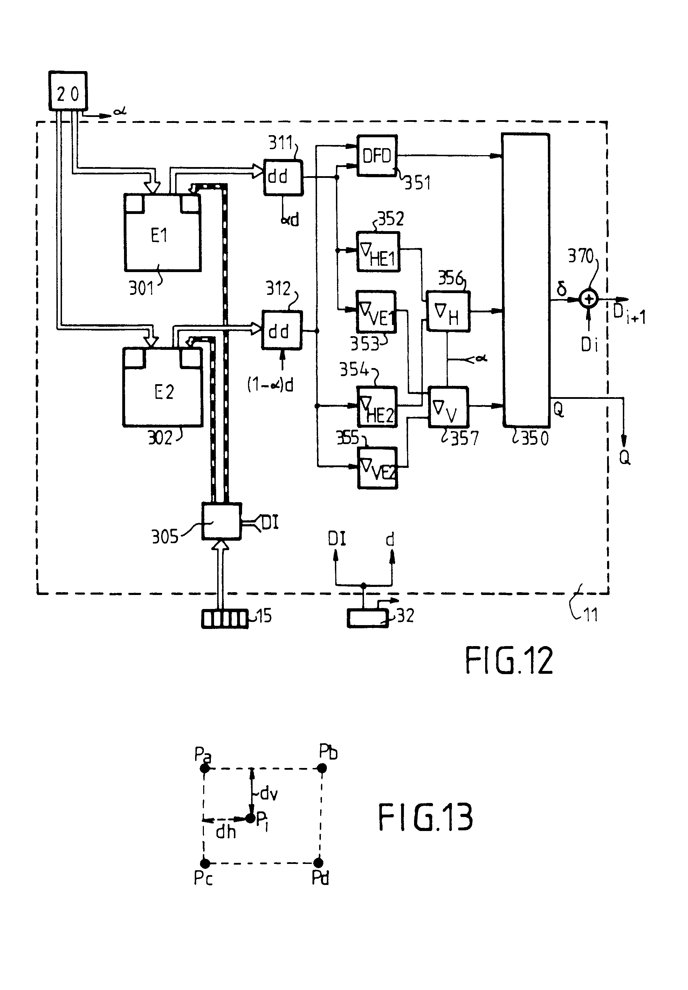

Le circuit de lecture 260 va rendre disponibles aux différents organes les informations concernant deux images successives. Ainsi à l'instant tr1 qui correspond sur la figure 10 à l'instant tw4, les mémoires MY1 et MY2 contenant les informations des images EE1 et EE2 sont rendues disponibles ; puis à l'instant tr2 ce sont les mémoires MY2 et MY3 concernant les images EE2 et EE3 et ceci ainsi de suite jusqu'à l'instant tr6 où l'on détecte une marque d'interpolation indiquant qu'à partir de deux images identiques on effectue deux interpolations. Sur la figure 10 on a deux interpolations à effectuer sur les images EE6 et EE7 contenues dans les mémoires MY2 et MY3. La figure 11 explicite le cas où la conversion de standards doit s'effectuer vers des cadences de 59,94 Hz ; la marque d'interpolation pour les images EE6 et EE7 détermine deux valeurs $\alpha$ : $\alpha1$ et $\alpha2$ telles que par exemple : $\alpha1 = 0,005$ et $\alpha2 = 0,835$ puisque tr1 coïncide avec tw4.

A la figure 12, on a montré en détail la structure des organes élémentaires $11'... 11^{(n)}$. Ces organes comportent deux mémoires de travail 301 et 302 prévues chacune pour contenir les informations de deux images différentes consécutives. Ces mémoires sont chargées à partir du circuit de décodage 17 ainsi qu'il l'a été dit.

Pour effectuer les calculs indiqués aux formules (2), (3) et (4), la valeur du vecteur mouvement $D_i$ est décomposée en deux parties : une partie entière DI et une partie fractionnaire d, de sorte que $D_i$ s'écrit :

$$D_i = DI + d.$$

Ainsi un circuit de recherche 305 va chercher dans les mémoire 301 et 302 des points de luminance correspondant à des valeurs entières DI, cela en fonction du contenu du compteur de blocs 15. Deux organes d'interpolation linéaires 311 et 312 vont traiter la partie fractionnaire. Ils effectuent des interpolations linéaires en fonction d'un vecteur d'entrée dd, ceci pour déterminer la luminance d'un point $P_i$ selon la formule :

$$P_i = P_a(1-d_H).(1-d_V) + P_b.d_H(1-d_v) + P_d(1-d_H).d_V + P_c.d_H.d_V$$

$P_a$, $P_b$, $P_c$, et $P_d$ représentent la luminance des points existants entourant le point intermédiaire $P_i$,
$d_H$ et $d_V$ représentent les composantes horizontale et verticale du vecteur dd.
Ceci est représenté à la figure 13.

Ce vecteur dd est égal à $\alpha d$ pour l'organe 311 et à $(1-\alpha)d$ pour l'organe 312. La valeur $\alpha$ est déterminée à partir de la marque d'interpolation provenant du circuit mémoire 20.

Un circuit de calcul 350 détermine les valeurs $\delta$ et Q (voir formules (3), (4) et (10) à partir d'opérations préalables effectuées par des circuits 351 à 357. Un additionneur final 370 effectue l'opération qui donne $D_{i+1}$.

Le circuit 351 effectue le calcul de DFD.

Les circuits 352 et 353 effectuent respectivement les calculs de gradients horizontal et vertical de l'image contenue dans la mémoire 301.

Les circuits 354 et 355 effectuent respectivement les calculs de gradients horizontal et vertical de l'image contenue dans la mémoire 302.

Le circuit 356 calcule le gradient horizontal dans l'image à interpoler en appliquant la formule (6) et le circuit 357 le gradient vertical en appliquant la formule (7).

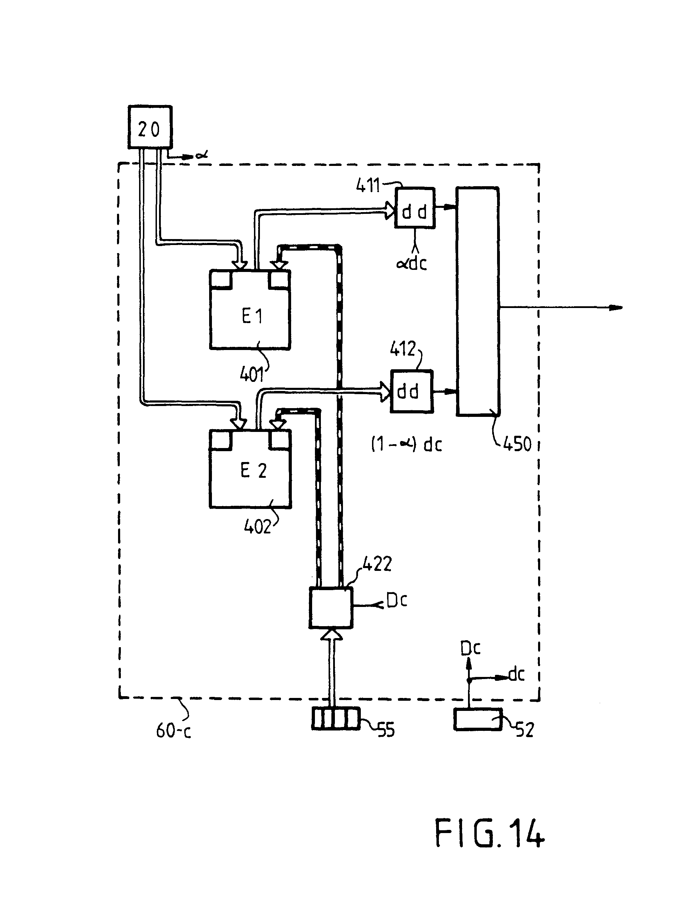

La figure 14 montre plus en détail la structure des organes élémentaires d'affectation 60-c (c = 1,..., L). Ces organes comportent deux mémoires de travail 401 et 402 prévues chacune pour contenir des informations concernant deux images différents consécutives. Ces mémoires sont mises en relation avec le circuit mémoire 20 à l'aide du circuit de décodage 57. Cet organe élémentaire 60-c comporte aussi, rattachés à chacune des mémoires 401 et 402, deux organes d'interpolation linéaire 411 et 412, pour effectuer des interpolations sur la partie fractionnaire dc du vecteur candidat Dc.

Les mémoires 401 et 402 sont adressées à partir du compteur 55.

En fonction de la valeur du vecteur candidat Dc, un circuit d'adressage 422 va adresser les points d'image concernés par le calcul qui va être effectué par un organe 450. La valeur $\alpha$ est élaborée en fonction de la marque d'interpolation provenant du circuit 20. L'organe 450 effectue le calcul donné par la formule (11).

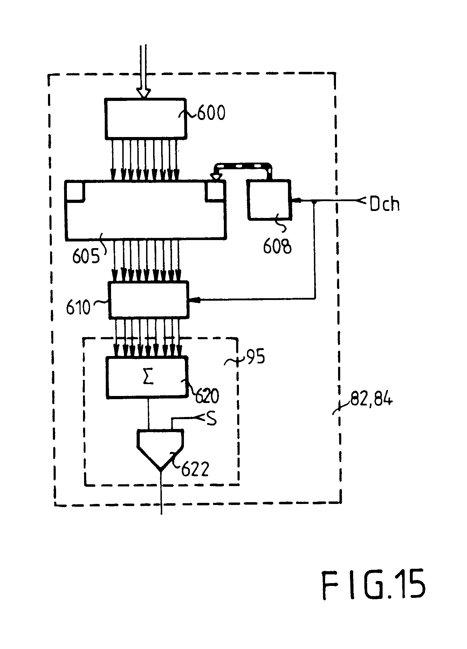

La figure 15 montre plus en détail la structure des organes de traitement 82 et 84 faisant partie de l'organe de cohérence 80. Il est formé d'un circuit de répartition 600 qui fournit pour chaque vecteur déplacement les huit autres correspondant aux domaines DDP et DDF déjà définis. Ces neuf vecteurs sont emmagasinés dans un circuit mémoire 605. Un vecteur Dch dont on veut s'assurer la cohérence est appliqué à un circuit d'adressage 608 utilisé pour la lecture de la mémoire 605. En sortie de la mémoire 605 on obtient les neuf vecteurs du domaine DDP ou DDF à comparer avec le vecteur Dch. C'est le circuit de comparaison 610 qui effectue cette opération. Ce circuit fournit le résultat de chaque comparaison avec Dch. Un circuit semblable au circuit 95 fournit le signal de similitude en comptant les vecteurs semblables au moyen d'un circuit 620 et en les comparant à une valeur de seuil au moyen du comparateur 622.

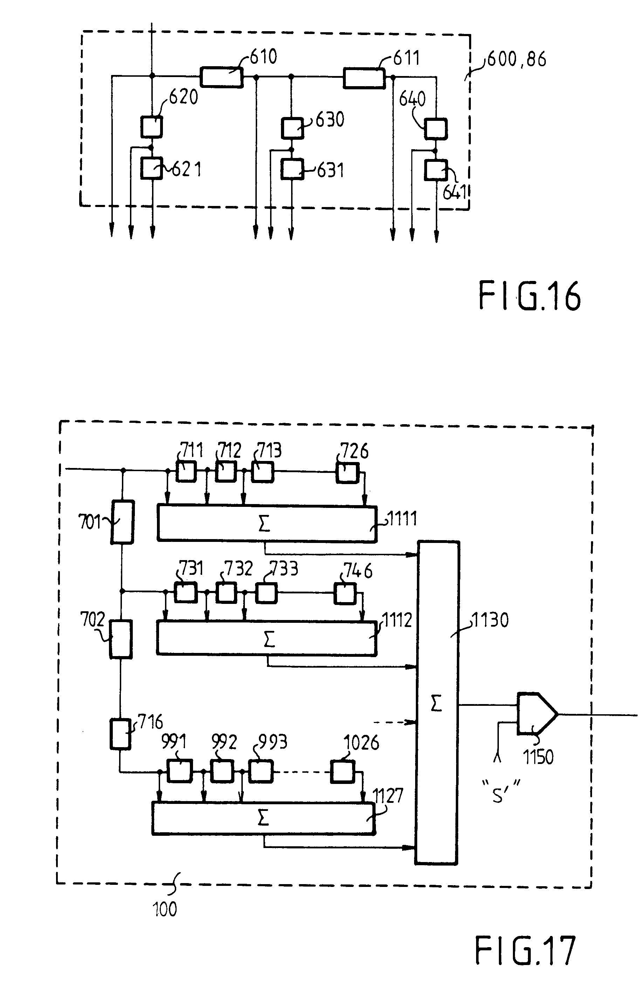

A la figure 16 on a montré en détail le circuit de répartition 600 semblable au circuit de répartition 86. Ces circuits sont formés d'éléments de retard ligne 610 et 611 montés en cascade et apportant un retard égal à la durée d'une ligne. A l'entrée de l'élément 610 qui constitue l'entrée de ces circuits, on a disposé deux éléments de retard points 620 et 621 amenant chacun un retard égal à la durée qui sépare deux points d'image. De la même manière sont disposés à la sortie de l'élément 610, deux éléments de retard points 630 et 631 et à la sortie de l'élément 611 deux éléments de retard points 640 et 641. Les signaux de sortie de ces circuits 600, 86 sont considérés à l'entrée de l'élément 610 et aux sorties des éléments 620, 621, 610, 630, 631, 611, 640 et 641. On constate que ces sorties fournissent bien les indications requises concernant les domaines DDF, DDN et DDP.

A la figure 17, on a détaillé l'organe de filtrage de décision 100 qui réalise ici simplement une décision majoritaire. Il est formé d'une cascade d'éléments de retard ligne 701 à 715 dont le nombre dépend de la grandeur verticale du domaine DSS ($17.\Delta X \times 17.\Delta Y$). A l'entrée de l'élément 701 et aux sorties des éléments 701, 702,... et 716 sont branchées différentes cascades d'éléments de retard point 711, 712,... 726 pour la première 731, 732,... 736 pour la deuxième et ainsi de suite jusqu'à la dernière avec les éléments 991, 992,... 1026. Différents additionneurs 1111 à 1127 additionnent les résultats de ces cascades. Un additionneur final 1130 somme les résultats des différents additionneurs 1111 à 1126 pour une comparaison à effectuer par un organe 1150. Ainsi si une somme est supérieure à S' = 144 [$\approx (17 \times 17)/2$] on déclare que le signal est valide ; si la somme est inférieure, la validité n'est pas reconnue. On peut aussi pondérer les signaux au niveau de chaque élément de retard, on parle alors de somme pondérée.

**Revendications**

1. Dispositif pour interpoler par estimation et compensation de mouvement des images découpées en blocs de p points d'images, dispositif comportant :
   - un organe de calculs d'interpolation (120) pour former une image M en fonction de vecteurs de mouvement $\vec{D}$ en effectuant une opération du genre :

$$I(\vec{z},M) = (1-\alpha).I(\vec{z}-\alpha\vec{D},E1) + \alpha I[\vec{z}+(1-\alpha)\vec{D},E2]$$

   le vecteur mouvement $\vec{D}$ représentant le déplacement du point de l'image M défini par $\vec{z}$ entre les images E1 et E2,
   - un organe d'estimation de mouvement (10) par blocs pour former des vecteurs de mouvement $\vec{D}_{m,n}$ définis pour des blocs de points d'images identifiés par m, n,
   caractérisé en ce qu'il comporte, en outre :
   - un organe d'affectation (50) pour affecter à chaque point d'image $\vec{z}$ un vecteur mouvement qui minimise une certaine fonction de $\vec{z}$ et de $\vec{D}_c$ : $CT(\vec{z},\vec{D}_c)$ parmi des vecteurs de mouvement candidats $\vec{D}_c$ qui sont associés à un ensemble prédéterminé de blocs;
   - la fonction $CT(\vec{z},\vec{D}c)$, calculée sur un ensemble B de q points entourant le point courant, q étant inférieur ou égal à p est du genre :

$$CT(\vec{z},\vec{D}c) = \sum_B \left| [I(\vec{z} + (1-\alpha)\vec{D}c,E2] - I(\vec{z}-\alpha.\vec{D}c,E1) \right|$$

2. Dispositif pour interpoler des images par estimation et compensation de mouvement selon la revendication 1, caractérisé en ce que l'ensemble prédéterminé de blocs est constitué par le bloc lui-même auquel le point de l'image à interpoler appartient et par les huit blocs qui l'entourent.

3. Dispositif pour interpoler des images par estimation et compensation de mouvement selon la revendication 1 ou 2, caractérisé en ce que l'organe d'estimation est du type récursif.

4. Dispositif selon l'une des revendications 1 à 3, caractérisé que ce qu'il comporte en outre un organe de test de cohérence (80) pour fournir audit organe de calculs d'interpolations, un vecteur final de mouvement DP pour chaque point de l'image à interpoler, en considérant les vecteurs de mouvement des points voisins.

5. Dispositif pour interpoler des images selon la revendication 4, caractérisé en ce que l'organe de test de cohérence est formé d'un organe de comptage de vecteurs semblables qui sont semblables au vecteur affecté au point courant et qui sont relatifs à des points situés dans un premier domaine entourant le point courant et/ou à des points situés dans un deuxième domaine entourant le point correspondant au point courant dans au moins une image antérieure et/ou à des points situés dans un troisième domaine entourant le point correspondant au point courant dans au moins une image postérieure, d'un organe de détermination de similitude affecté au premier, au deuxième et au troisième domaine, pour fournir un signal de similitude lorsqu'un certain nombre de vecteurs semblables a été compté, d'un organe de cohérence pour fournir un signal de cohérence lorsqu'au moins un signal de similitude relatif au premier, au deuxième et au troisième domaine est détecté et d'un organe de filtrage de décision pour effectuer une somme éventuellement pondérée des signaux de cohérence relatifs à des points situés dans un quatrième domaine entourant le point courant et pour fournir un signal de validité lorsque ladite somme excède un certain seuil.

6. Dispositif pour interpoler des images selon la revendication 5, caractérisé en ce que l'organe d'interpolation effectue pour chaque point courant une interpolation compensée avec le vecteur mouvement s'il est validé par le signal de validité ou une interpolation avec le vecteur mouvement nul s'il n'y a pas de signal de validation.

7. Dispositif pour interpoler des images selon l'une des revendications 3 à 6, caractérisé en ce que l'organe d'estimation de mouvement du type récursif comporte une pluralité d'organes d'estimation élémentaires pour fournir chacun, pour chaque bloc de l'image (ou bloc courant) à interpoler, un vecteur mouvement de bloc à partir d'un vecteur initial et pour fournir une information de qualité concernant ledit vecteur mouvement de bloc et un organe de décision pour fournir le vecteur mouvement de bloc retenu parmi les vecteurs mouvements élaborés par lesdits organes d'estimation élémentaires en fonction de l'information de qualité.

8. Dispositif pour interpoler des images selon la revendication 7, caractérisé en ce que les vecteurs initiaux sont soit le vecteur de déplacement nul soit le vecteur mouvement de bloc retenu attribué à un bloc antérieur contigu placé au-dessus et à droite du bloc courant, soit le vecteur mouvement de bloc retenu attribué au bloc antérieur contigu placé à gauche du bloc courant.

9. Convertisseur de standards constitué à partir d'un dispositif pour interpoler des images selon l'une des revendication 1 à 8.

**Claims**

1. An arrangement for interpolating images by motion estimation and compensation, which images are split up into blocks of p picture elements, said arrangement comprising:
   - an interpolation calculation member (120) for forming an image M as a function of motion vectors $\vec{D}$ by performing an operation of the type:

$$I(\vec{z},M) = (1-\alpha).I(\vec{z}-\alpha\vec{D},E1) + \alpha I[\vec{z}+(1-\alpha)\vec{D},E2]$$

   in which the motion vector $\vec{D}$ represents the displacement of the picture element M defined by $\vec{Z}$ between the images E1 and E2,
   - a block motion estimation member (10) for forming motion vectors $\vec{D}_{m,n}$ defined for blocks of picture elements identified by m,n,
   characterized in that it also comprises:
   - an assigning member (50) for assigning a motion vector to each picture element $\vec{Z}$ which minimises a given function of $\vec{Z}$ and of $\vec{D}_c$ : $CT(\vec{Z},\vec{D}_c)$ from candidate motion vectors $D_c$ which are associated with a predetermined set of blocks;

- in which the function CT($\vec{Z}$, $\vec{D}_c$), calculated for a set B of q elements surrounding the current element, with q being less than or equal to p, is of the type:

$$\text{CT}(\vec{z}, \vec{Dc}) = \sum_B \left| [I(\vec{z} + (1-\alpha)\vec{Dc}, E2] - I(\vec{z} - \alpha.\vec{Dc}, E1) \right|$$

2. An arrangement for interpolating images by motion estimation and compensation as claimed in Claim 1, characterized in that the predetermined set of blocks is constituted by the block with which the picture element to be interpolated is associated and by the eight blocks which surround it.

3. An arrangement for interpolating images by motion estimation and compensation as claimed in Claim 1 or 2, characterized in that the estimation member is of the recursive type.

4. An arrangement as claimed in any one of Claims 1 to 3, characterized in that it also comprises a coherence test member (80) for applying to said interpolation calculation member a final motion vector DP for each picture element to be interpolated, by considering the motion vectors of the adjacent elements.

5. An arrangement for interpolating images as claimed in Claim 4, characterized in that the coherence test member comprises a counting member for counting vectors which are similar to the vector assigned to the current element and relate to elements positioned in a first domain surrounding the current element and/or elements positioned in a second domain surrounding the element which corresponds to the current element in at least a previous image and/or elements positioned in a third domain which surrounds the element corresponding to the current element in at least a subsequent image, a similarity determining member assigned to the first, second and third domains to supply a similarity signal when a certain number of similar vectors have been counted, a coherence member for the supply of a coherence signal when at least one similarity signal relating to the first, second and third domains has been detected, and a decision filtering member for taking a sum, optionally weighted, of the coherence signals relating to elements positioned in a fourth domain surrounding the current element and for the supply of a validity signal when said sum exceeds given threshold.

6. An arrangement for interpolating images as claimed in Claim 5, characterized in that the interpolation member effects for each current element a motion-compensated interpolation using the motion vector if it is validated by the validation signal or an interpolation using the zero motion vector if there is no validation signal.

7. An arrangement for interpolating images as claimed in any one of Claims 3 to 6, characterized in that the motion estimation member of the recursive type includes a plurality of elementary estimation members for each supplying, for each block of the image (or current block) to be interpolated a block motion vector from an initial vector and to supply quality information concerning said block motion vector and a decision member for supplying the block motion vector retained from among the motion vectors processed by said elementary estimation members as a function of the quality information.

8. An arrangement for interpolating images as claimed in Claim 7, characterized in that the initial vectors are either the zero displacement vector, or the retained block motion vector contributed to a previous contiguous block placed above and to the right of the current block, or the retained block motion vector attributed to the contiguous previous block placed to the left of the current block.

9. A television standards converter comprising an arrangement for interpolating images as claimed in any one of Claims 1 to 8.

## EP 0 341 769 B1

**Patentansprüche**

1. Vorrichtung, um durch Abschätzung und Kompensation der Bewegung Bilder zu interpolieren, wobei die Bilder in Blöcke zu jeweils p Bild-punkten unterteilt sind, und wobei diese Vorrichtung die folgenden Elemente enthält:

- eine Einrichtung zur Interpolationsberechnung (120), die in Abhängigkeit von Bewegungsvektoren $\vec{D}$ ein Bild M durch Berechnungen der Art:

$$I(\vec{z},M) = (1-\alpha).I(\vec{z}-\alpha\vec{D},E1) + \alpha I[\vec{z}+(1-\alpha)\vec{D},E2]$$

erzeugt, wobei der Bewegungsvektor $\vec{D}$ die Bewegung eines durch $\vec{Z}$ definierten Bildpunktes von M zwischen den Bildern E1 und E2 darstellt;

- eine Einrichtung zur Abschätzung der Bewegung (10) in Blöcken, um für die durch m und n definierten Blöcke von Bildpunkten den Bewegungsvektor $\vec{D}_{m,n}$ zu erzeugen;

dadurch gekennzeichnet, daß sie außerdem folgende Elemente enthält:

- eine Zuordnungseinrichtung (50), die jedem Bildpunkt $\vec{Z}$ einen Bewegungsvekor dergestalt zuordnet, daß eine bestimmte Funktion von $\vec{Z}$ und $\vec{D}_c$ : $CT(\vec{Z},\vec{D}_c)$ aus den möglichen Bewegungsvektoren $\vec{D}_c$, die ihrerseits zu einer vorgegebenen Menge von Blöcken gehören, ein Minimum erreicht,

- die Funktion $CT(\vec{Z},\vec{D}_c)$, die für eine Menge B von q Punkten, die den laufenden Punkt umgeben, berechnet wird, wobei q Kleiner-gleich p ist, und die die folgende Form hat:

$$CT(\vec{z},\vec{D}c) = \sum_{B} |[I(\vec{z} + (1-\alpha)\vec{D}c,E2] - I(\vec{z}-\alpha.\vec{D}c,E1)|$$

2. Vorrichtung, um durch Abschätzung und Kompensation der Bewegung Bilder zu interpolieren nach Anspruch 1, dadurch gekennzeichnet, daß die vorgegebene Menge von Blöcken aus dem Block besteht, der den Punkt des zu interpolierenden Bildes enthält, sowie aus den acht Blöcken, die ihn umgeben.

3. Vorrichtung, um durch Abschätzung und Kompensation der Bewegung Bilder zu interpolieren nach Anspruch 1 oder 2, dadurch gekennzeichnet, daß die Abschätzung der Bewegung rekursiv erfolgt.

4. Vorrichtung nach einem der Ansprüche 1 bis 3, dadurch gekennzeichnet, daß sie darüberhinaus eine Kohärenz-Prüfungseinrichtung (80) enthält, um der Einrichtung zur Interpolationsberechnung für jeden Punkt des zu interpolierenden Bildes einen endgültigen Bewegungsvektor DP unter Berücksichtigung der Bewegungsvektoren benachbarter Punkte liefern zu können.

5. Vorrichtung zur Bildinterpolation nach Anspruch 4, dadurch gekennzeichnet, daß die Kohärenz-Prüfungseinrichtung aufgebaut ist: aus einer Zähleinrichtung ähnlicher Vektoren, die dem dem laufenden Punkt zugeordneten Vektor ähnlich sind und die sich auf Punkte beziehen, die in einem ersten, den laufenden Punkt umgebenden Bereich liegen, und/oder auf Punkte, die in einem zweiten Bereich in mindestens einem vorhergehenden Bild liegen, der den dem laufenden Punkt entsprechenden Punkt umgibt, und/oder auf Punkte, die in einem dritten Bereich in mindestens einem nachfolgenden Bild liegen, der den dem laufenden Punkt entsprechenden Punkt umgibt;

aus einer Einrichtung zur Ähnlichkeitserkennung, die dem ersten, dem zweiten und dem dritten Bereich dergestalt zugeordnet ist, daß sie bei Zählung einer bestimmter Anzahl ähnlicher Vektoren ein Ähnlichkeitssignal abgibt;

aus einer Kohärenz-Prüfungseinrichtung, die ein Kohärenzsignal abgibt, wenn im ersten, im zweiten und im dritten Bereich mindestens ein Ähnlichkeitssignal erkannt wurde;

- und aus einem Entscheidungsfilter, der eine eventuell gewichtete Summe aus den Kohärenzsignalen derjenigen Punkte bildet, die zu einem vierten, den laufenden Punkt umgebenden Bereich gehören, und der ein Validierungssignal abgibt, sobald diese Summe einen bestimmten Schwellenwert übersteigt.

6. Vorrichtung zur Bildinterpolation nach Anspruch 5, dadurch gekennzeichnet, daß die Interpolationseinrichtung für jeden laufenden Punkt eine kompensierte Interpolation mit dem Bewegungsvektor durchführt, falls er durch das Validierungssignal validiert ist, oder eine Interpolation mit dem Bewegungsvektor "Null" durchführt, falls kein Validierungssignal vorliegt.

7. Vorrichtung zur Bildinterpolation nach einem der Ansprüche 3 bis 6, dadurch gekenn-zeichnet, daß die rekursiv arbeitende Einrichtung zur Bewegungsabschätzung eine Vielzahl von Elementar-Einrichtungen zur Abschätzung enthält, die jeweils für jeden zu interpolierenden Block des Bildes (bzw. für den laufenden Block) ausgehend von einem Anfangsvektor einen Bewegungsvektor des Blocks liefern und die für diesen Bewegungsvektor des Blocks eine Güte-Information liefern, sowie eine Entscheidungseinrichtung enthält, um aus den von den Elementar-Einrichtungen zur Abschätzung ermittelten Bewegungsvektoren anhand der Güte-Information einen Bewegungsvektor für den Block auszuwählen.

8. Vorrichtung zur Bildinterpolation nach Anspruch 7, dadurch gekennzeichnet, daß als Anfangsvektoren entweder der Bewegungsvektor "Null", oder der für einen vorhergehenden, rechts oberhalb des laufenden Blocks gelegenen Block ausgewählte und zugeordnete Bewegungsvektor, oder der für einen vorhergehenden, links vom laufenden Block gelegenen Block ausgewählte und zugeordnete Bewegungsvektor genommen wird.

9. Fernsehnormen-Konvertierer, der auf einer Vorrichtung zur Bildinterpolation nach einem der Ansprüche 1 bis 8 aufgebaut ist.

FIG.1

EP 0 341 769 B1

FIG.2

FIG.3

FIG.4

FIG.5

FIG.6

FIG.7

FIG.8

FIG.9

FIG.11

tw1  tw2  tw3  tw4  tw5

MY 1 ──│ EE1 │──────────────│ EE5 │──────────────│ EE9 │────────

MY 2 ────│ EE2 │──────────────│ EE6 │──────────────│ EE10 │──────

250 {

MY 3 ──────│ EE3 │──────────────│ EE7 │──────────────│ E 11 │────

MY 4 ────────│ EE4 │──────────────│ EE8 │──────────────│ E 12 │──

| | tr1 | tr2 | tr3 | | | tr6 | tr7 | | | |
|---|---|---|---|---|---|---|---|---|---|---|
| | MY1 MY2 | MY2 MY3 | MY3 MY4 | MY4 MY1 | MY1 MY2 | MY2 MY3 | MY2 MY3 | | | |
| | EE1 EE2 | EE2 EE3 | EE3 EE4 | EE4 EE5 | EE5 EE6 | EE6 EE7 | EE6 EE7 | | | |
| $\alpha(60)$ | 5/6 | 4/6 | 3/6 | 2/6 | 1/6 | 0 | 5/6 | 4/6 | 3/6 | 2/6 |
| $\alpha(59{,}94)$ | – – | – – | – – | – – | – – | 0,006 | 0,835 | – – | – – | – – |

260

FIG.10

EP 0 341 769 B1

FIG.12

FIG.13

FIG.14

FIG.15

FIG.16

FIG.17

23